# EUROPÄISCHE PATENTSCHRIFT

(11) **EP 0 835 906 B1**
(45) Veröffentlichungstag und Bekanntmachung des Hinweises auf die Patenterteilung: **05.11.2003**
(21) Anmeldenummer: 97810722.5
(22) Anmeldetag: 01.10.1997
(51) Int. Cl.: C08K 5/3492, D21H 21/30, C08K 5/00

(54) **Dispersionen von optischen Aufhellern**
Dispersions of optical brightening agents
Dispersions d'azurants optiques

(30) Priorität: 10.10.1996 CH 247396
(43) Veröffentlichungstag der Anmeldung: 15.04.1998
(73) Patentinhaber: Ciba Specialty Chemicals Holding Inc., 4057 Basel (CH)
(72) Erfinder: Rohringer, Peter, 4124 Schönenbuch (CH); Traber, Rainer Hans, 4153 Reinach (CH); Ruf, Peter, 431 36 Mölndal (SE); Engelhardt, Thomas, 79618 Rheinfelden (DE)

(56) Entgegenhaltungen:
- GB-A- 2 107 606
- US-A- 4 216 111
- US-A- 5 429 767

## Beschreibung

Die vorliegende Erfindung betrifft neue Dispersionen von optischen Aufhellern, deren Verwendung in Streichmassen, z.B. für die Beschichtung von Papier, sowie Streichmassen, die diese Dispersionen enthalten.

Optische Aufheller, die in der Papierindustrie Verwendung finden, werden üblicherweise in Form von Lösungen in den Handel gebracht, die meistens das Natriumsalz des Aufhellers und beträchtliche Mengen eines Lösungsvermittlers, wie z.B. Harnstoff oder ein Lösungsmittel, z.B. ein Polyalkylenglykol, enthalten, damit der Aufheller vollständig gelöst ist. Um die Stabilität der Handelsform auch bei tiefen Temperaturen zu gewährleisten, konnte bisher eine Konzentration von ca 22 % Wirksubstanz nicht überschritten werden, wenn der Gehalt an Lösungsvermittler in einem tragbaren Verhältnis zu der Menge an Aufheller bleiben sollte. Da diese Lösungsvermittler nach der Applikation im Abwasser unerwünscht sind, bestand der Bedarf nach einer Formulierung, die keine oder nur geringe Mengen an solchen Substanzen enthält.

Es wurde nun gefunden, dass man von den optischen Aufhellem der unten angegebenen Formel (1) stabile wässrige Dispersionen herstellen kann, wenn die Aufheller als freie Säure vorliegen und die Dispersionen eine Polyhydroxyverbindung enthalten. Überraschenderweise sind solche Dispersionen längere Zeit lagerstabil und gehen bei der Anwendung in Papierstreichmassen, schon bei Anwesenheit geringer Mengen Alkali schnell genug in Lösung, so dass eine einwandfreie Verteilung gewährleistet ist und zwar sowohl bei der Applikation in der Masse als auch bei der Einarbeitung in Papierstreichmassen für die Oberflächenapplikation im Strich.

Überraschenderweise kann bei Verwendung von Füllmitteln wie gefälltem Calciumcarbonat oder natürlichem Calciumcarbonat auf die Zugabe von Alkali ganz verzichtet werden.

Die erfindungsgemässen Dispersionen enthalten keine Dispergatoren, was einen bedeutenden ökonomischen Vorteil darstellt.

Gegenstand der vorliegenden Erfindung sind Dispersionen von optischen Aufhellem, die dadurch gekennzeichnet sind, dass sie
a) 5 bis 60 Gew. %, bezogen auf das Gesamtgewicht der Dispersion, eines optischen Aufhellers der Formel 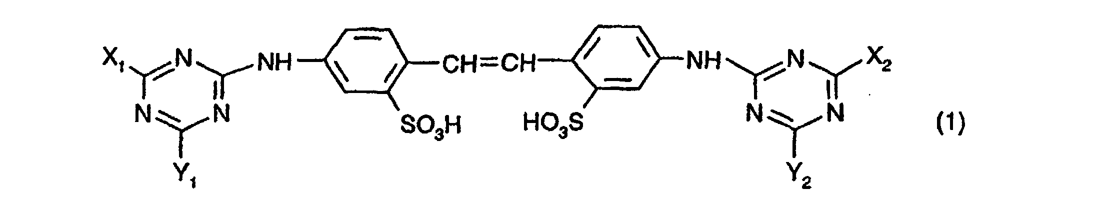 der als freie Säure vorliegt,
   worin X₁, X₂, Y₁ und Y₂ unabhängig voneinander je eine NH₂-Gruppe oder einen primären oder sekundären Aminrest oder eine ggf. verzweigte Alkoxygruppe oder eine Phenoxygruppe bedeuten,
b) 0,01 bis 3 Gew. %, bezogen auf das Gesamtgewicht der Dispersion, einer Polyhydroxyverbindung die
   (i) ein anionisches modifiziertes Polysaccharid enthalten, das sich von der Zellulose, Stärke oder von Heteropolysacchariden ableitet, wobei in den Seitenketten als weitere Monosaccharide Mannose und Glucuronsäure enthalten sein können oder
   (ii) einen anorganischen Verdicker oder ein Gemisch aus einem anorganischen und einem organischen Verdicker darstellt, wobei der anorganische Verdicker Hektorit oder Montmorillonit ist,
c) Wasser und gegebenenfalls
d) weitere Zusätze enthalten, mit dem Vorbehalt, dass die Dispersionen keine weiteren Dispergatoren enthalten.

Vorzugsweise enthalten die Dispersionen weniger als 2 Gew. %, insbesondere weniger als 0,8 Gew. % Elektrolyt.

Die Dispersionen enthalten vorzugsweise 10 bis 50 Gew. %, insbesondere 20 bis 50 Gew. %, vor allem 30 bis 45 Gew. % Aufheller, bezogen auf-das Gesamtgewicht der Dispersion.

Bevorzugt sind solche Dispersionen, die einen Aufheller der Formel 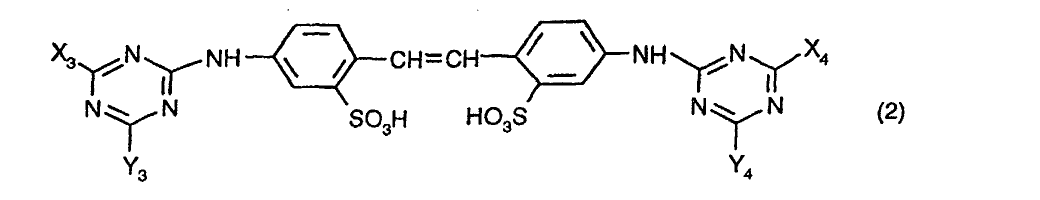 enthalten, worin X₃, X₄, Y₃ und Y₄ unabhängig voneinander je eine Phenylaminogruppe, die durch C₁-C₂-Alkyl mono- oder disubstituiert sein kann, die Morpholinogruppe, eine Mono-C₁-C₄-Alkylamino- oder Di-C₁-C₄-Alkylaminogruppe, die durch einen oder mehrere Hydroxylreste substituiert sein können, oder eine C₁-C₄-Alkoxygruppe bedeuten.

Von ganz besonderem Interesse sind Dispersionen, enthaltend einen optischen Aufheller der Formel 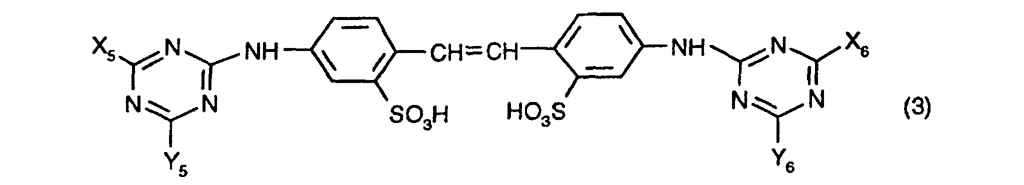 worin X₅ und X₆ unabhängig voneinander je eine Phenylaminogruppe, die durch C₁-C₂-Alkyl mono- oder disubstituiert sein kann, und Y₅ und Y₆ eine Morpholinogruppe oder eine Di-C₁-C₄- Alkylaminogruppe, die durch einen oder mehrere Hydroxylreste substituiert sein kann, bedeuten.

Unter diesen sind solche besonders bevorzugt, bei denen Y₅ und Y₆ eine Di-C₁-C₄-Alkylaminogruppe, die durch einen oder mehrere Hydroxylreste substituiert sein kann, bedeuten.

Vorzugsweise enthalten die erfindungsgemässen Dispersionen mehr als 25 Gew. % Aufheller und weniger als 0,8 Gew. % Elektrolyt, bezogen auf das Gesamtgewicht der Dispersion. Unter Elektrolyt sind in diesem Zusammenhang niedermolekulare anorganische Salze zu verstehen, die als Nebenprodukte aus der Synthese oder den verwendeten Chemikalien oder Lösungsmitteln, z.B. dem Wasser, vorhanden sind. Vor allem handelt es sich um Alkali- halogenide, -sulfate oder -hydrogensulfate.

Die optischen Aufheller der Formel (1) sind bekannt oder können auf an sich bekannte Art und Weise hergestellt werden. Falls die Aufheller nach der Synthese mehr als die gewünschte Menge Elektrolyt enthalten, so muss dieser Überschuss entfernt werden. Dies kann durch übliche Methoden geschehen. In den meisten Fällen genügt schon eine Wäsche des Presskuchens mit entmineralisiertem Wasser.

Als Polyhydroxyverbindung kommen z.B. die üblichen Verdicker in Frage. Es handelt sich um organische natürliche Verdicker, organische abgewandelte Naturstoffe, um organische vollsynthetische Verdicker, wie z. B. Polyvinylalkohol, oder um anorganische Verdicker, wie z.B. Montmorillonit oder Hectorit.

Vorzugsweise enthalten die erfindungsgemässen Dispersionen als Polyhydroxyverbindung ein anionisches modifiziertes Polysaccharid, das sich von der Zellulose, Stärke oder von Heteropolysacchariden ableitet, wobei in den Seitenketten weitere Monosaccharide, wie z.B. Mannose und Glucuronsäure enthalten sein können. Beispiele für geeignete anionische Polyhydroxyverbindungen sind Natriumalginat, carboxymethyliertes Guar, Carboxymethylcellulose, Carboxyethylcellulose, Carboxymethylstärke, carboxymethyliertes Johannisbrotkemmehl und vor allem Xanthan. Selbstverständlich können auch Gemische, enthaltend zwei oder mehrere Polyhydroxyverbindungen, eingesetzt werden.

Die Menge an Polyhydroxyverbindung in den erfindungsgemässen Dispersionen beträgt 0,01 bis 3 Gew. %, bezogen auf das Gewicht der Dispersion, wobei ein Bereich von 0,05 bis 0,5 Gew. % bevorzugt und ein Bereich von 0,1 bis 0,3 Gew. % besonders bevorzugt ist.

Falls gewünscht können die erfindungsgemässen Dispersionen weitere Zusätze enthalten, beispielsweise Konservierungsmittel, z. B. 1,2-Benzisothiazolin-3-on oder Aldehyde, wie Formaldehyd oder Acetaldehyd, Gefrierschutzmittel oder Entschäumungsmittel.

Die erfindungsgemässen Dispersionen erhält man z.B., indem man den feuchten Presskuchen oder auch das trockene Pulver eines optischen Aufhellers der Formel (1) mit Wasser intensiv vermischt und gegebenenfalls durch eine Nassmahlung die Teilchengrösse auf einen Wert unter 20 µm, vorzugsweise unter 10µm verringert. Anschliessend setzt man eine Polyhydroxyverbindung und gegebenenfalls weitere Zusätze zu und vermischt, bis die Komponenten homogen verteilt sind.

Die erhaltenen Dispersionen sind während längerer Zeit lagerstabil, beispielsweise während 6 Monaten, auch bei Temperaturen von ca. 0° C bis zu 40° C.

Die erfindungsgemässen Dispersionen eignen sich zum Aufhellen von Papiermassen bei der Papierherstellung, z. B. Zellstoff, Holzstoff (chemical and mechanical pulp) und zum Aufhellen der in der Papierindustrie üblicherweise verwendeten Streichmassen und zwar zum Aufhellen von unpigmentierten, insbesondere aber von pigmentierten Papiermassen und Streichmassen.

Die bekannten Streichmassen enthalten als Bindemittel u.a. Kunststoffdispersionen auf Basis von Copolymerisaten aus Butadien-Styrol, Acrylnitril-Butadien-Styrol, Acrylsäureestern, Ethylen-Vinylchlorid oder Ethylen-Vinylacetat oder auf Basis von Homopolymerisaten, wie Polyvinylchlorid, Polyvinylidenchlorid, Polyethylen, Polyvinylacetat oder Polyurethanen. Ein bevorzugtes Bindemittel besteht aus Styrol-Butylacrylat- oder Styrol-Butadien-Acrylsäure-Mischpolymerisaten. Weitere Polymerlatices sind beispielsweise in den US-Patentschriften 3.265.654, 3.657.174, 3.547.899 und 3.240.740 beschrieben.

Zum Pigmentieren der Streichmassen dienen üblicherweise Aluminiumsilikate, wie China-Clay und Kaolin, ferner Bariumsulfat, Satinweiss, Titandioxid oder Calciumcarbonat (Kreide).

Rezepturen solcher bekannter Streichmassen für Papier sind beispielsweise beschrieben in J. P. Casey "Pulp and Paper", Chemistry and Chemical Technology, 2. Ed. Vol. III, S. 1648-1649 und in Mc Graw-Hill "Pulp and Paper Manufacture", 2. und 5. Ed. Vol. ll, S. 497.

Die erfindungsgemässen Streichmassen enthalten vorzugsweise 5 bis 70 Gew. % eines Weisspigmentes. Das Bindemittel wird vorzugsweise in einer Menge verwendet, die ausreicht, dass der Trockengehalt an polymerer Verbindung 1 bis 30 Gew. %, vorzugsweise 5 bis 25 Gew. % des Weisspigmentes ausmacht. Die Menge der erfindungsgemässen Aufhellerdispersion berechnet sich derart, dass der Aufheller in Mengen von 0,005 bis 1 Gew. %, insbesondere 0,01 bis 0,55 Gew. %, bezogen auf Weisspigment, vorliegt.

Die erfindungsgemässe Streichmasse kann dadurch hergestellt werden, dass man die Komponenten in beliebiger Reihenfolge bei Temperaturen von 10 bis 100 °C, vorzugsweise 20 bis 80 °C, mischt. Zu den Komponenten zählen hier auch die üblichen Hilfsmittel, die zur Regulierung der rheologischen Eigenschaften, wie Viskosität oder Wasserrückhaltevermögen, der Streichmassen eingesetzt werden können. Solche Hilfsmittel sind z.B. natürliche Bindemittel, wie Stärke, Casein, Protein oder Gelatine, Celluloseether, wie Carboxyalkylcellulose oder Hydroxyalkylcellulose, Alginsäure, Alginate, Polyethylenoxid oder Polyethylenoxidalkylether, Mischpolymerisate von Ethylenoxid und Propylenoxid, Polyvinylalkohol, Polyvinylpyrrolidon, wasserlösliche Kondensationsprodukte vom Formaldehyd mit Harnstoff oder Melamin, Polyphosphate oder polyacrylsaure Salze.

Die erfindungsgemässen Dispersionen werden entweder in die fertige Streichmasse oder in eine der Komponenten der Streichmasse eingearbeitet.

Die erfindungsgemässe Streichmasse kann zum Beschichten von Papier, Holz, Folien, wie z.B. Cellulose, Cellulosetriacetat, Textilstoffen etc. verwendet werden. Besonders bevorzugt ist die Anwendung auf Papier und Karton sowie Photopapieren.

Die Streichmasse kann auf das Substrat durch jedes herkömmliche Verfahren aufgebracht werden, beispielsweise mit einem Luftmesser, einem Streichmesser, einer Bürste, einer Rolle, einer Rakel oder einem Stab, worauf dann die Beschichtung z.B. mit einem Infrarottrockner und/oder Heisslufttrockner bei Temperaturen der Substratoberfläche im Bereich von 70 bis 200 °C, vorzugsweise von 90 bis 130 °C, bis auf eine Restfeuchte von 3 bis 6 Gew. % getrocknet wird.

Durch die Verwendung der erfindungsgemässen Aufhellerdispersionen zeichnen sich die erhaltenen Beschichtungen durch eine optimale Verteilung der optischen Aufheller über die gesamte Oberfläche und eine dadurch bedingte Steigerung des Weissgrades sowie eine hohe Lichtechtheit aus.

Bei der Applikation der erfindungsgemässen Aufhellerdispersionen ist ein alkalischer pH-Wert für die einwandfreie Lösung des optischen Aufhellers günstig. Dieser pH-Wert sollte bei Streichmassen vor allem im Bereich von 8 bis 11 und in der Masse vor allem bei 7,5 bis 9 liegen. Der gewünschte alkalische pH-Wert kann z.B. durch Zugabe von NaOH eingestellt werden, wobei man vorzugsweise diesen pH-Wert in der Faserstoffdispersion oder der Streichmasse bereits vor der Zugabe der Aufhellerdispersion einstellt. Bei Verwendung von alkalischen Füllmitteln, wie gefälltem oder natürlichem Calciumcarbonat, kann auf die Zugabe von Alkali verzichtet werden.

Ein weiterer Gegenstand der vorliegenden Erfindung ist daher die Verwendung der erfindungsgemässen Dispersionen zum optischen Aufhellen von Streichmassen für die Beschichtung von Papier sowie daher die Verwendung der erfindungsgemässen Dispersionen zum optischen Aufhellen von Faserstoffdispersionen bei der Papierherstellung.

### Beispiel 1:

Zu 3333 Teilen feuchtem Filterkuchen mit einem Elektrolytgehalt unter 0,3 %, enthaltend 1733 Teile Wasser und 1600 Teile des optischen Aufhellers der Formel 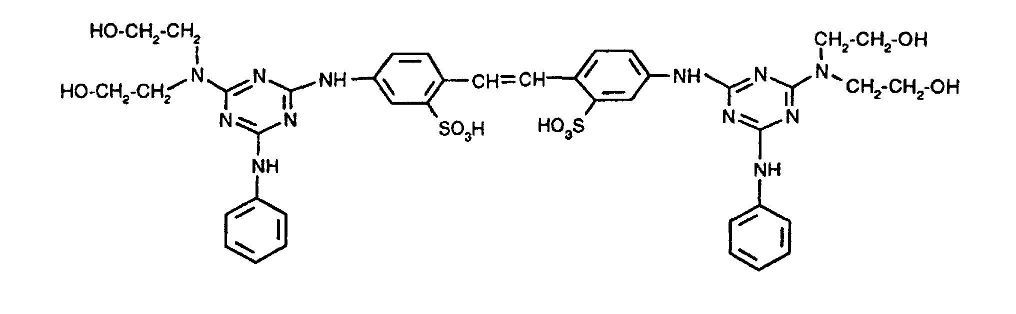 in Form der freien Säure, gibt man unter intensivem Rühren 312 Teile entsalztes Wasser und rührt, bis die Anschlämmung homogen verteilt ist. Dann setzt man 355 Teile einer wässrigen Lösung, enthaltend 1,5 Teile Xanthan und 2,3 Teile eines Konservierungsmittels (wässrige Lösung von 1,2-Benzisothlazolin-3-on) zu und rührt weitere 50 Minuten, bis zur homogenen Verteilung der Komponenten.

Man erhält eine Dispersion, die auch nach mehrwöchiger Lagerung bei 25 °C keine Ablagerungen zeigt.

### Beispiel 2:

Eine Fasersuspension, bestehend aus 5 Teilen Faser (1:1 Mischung aus Birkeund Kiefer-Kraftzellstoff; Mahlgrad 35°S.R.) in 200 Teilen Wasser mit einer Härte von 25 ppm CaO wird mit 10 % gefälltem Calciumcarbonat, bezogen auf Faserstoff, versetzt. Dann gibt man 0,0275 Teile der gemäss Beispiel 1 erhaltenen Aufheller-Dispersion zu, rührt langsam während 1 Minute und fügt 0,03 %, bezogen auf das Gesamtgewicht von Faser und Pigment, einer Lösung eines kommerziellen kationischen Retentionsmittels (modifiziertes Polyacrylamid) hinzu. Anschliessend werden auf einem Blattbildner (System Rapid-Köthen) Papierblätter hergestellt. Die feuchten Papierblätter werden gepresst und zwischen zwei Filterpapierblättern während 20 Minuten bei 110 °C getrocknet.

Man erhält Papierblätter, die bezüglich Fluoreszenz und Aufheller- Wirkung gleich gut sind wie Papierblätter, die unter Verwendung handelsüblicher Formulierungen des gleichen Aufhellers als Lösung, enthaltend Harnstoff, hergestellt werden.

### Beispiel 3:

Man arbeitet wie im Beispiel 2 beschrieben, verwendet jedoch anstelle von gefälltem Calciumcarbonat die gleiche Menge an natürlichem Calciumcarbonat.

Man erhält Papierblätter, die bezüglich Fluoreszenz und Aufheller- Wirkung gleich gut sind wie die gemäss Beispiel 2 erhaltenen Papierblätter.

### Beispiel 4:

Man arbeitet wie im Beispiel 2 beschrieben, setzt jedoch nach der Zugabe der Aufheller-Dispersion 1,6 Teile 0,1 n NaOH zu. Anschliessend wird wie im Beispiel 2 beschrieben aufgearbeitet.

Man erhält Papierblätter, die bezüglich Fluoreszenz und Aufheller- Wirkung gleich gut sind wie die gemäss Beispiel 2 erhaltenen Papierblätter.

### Beispiel 5:

Man arbeitet wie im Beispiel 3 beschrieben, setzt jedoch nach der Zugabe der Aufheller-Dispersion 1,6 Teile 0,1 n NaOH zu. Anschliessend wird wie im Beispiel 2 beschrieben aufgearbeitet.

Man erhält Papierblätter, die bezüglich Fluoreszenz und Aufheller- Wirkung gleich gut sind wie die gemäss Beispiel 2 erhaltenen Papierblätter.

### Beispiel 6:

Man verrührt 100 Teile natürliches Calciumcarbonat, 18 Teile einer 50 %igen Styrol-Butadien-Latex Dispersion, 1 Teil Polyvinylalkohol, 0,25 Teile eines synthetischen Verdickers und 45 Teile Wasser unter Zugabe von soviel NaOH, dass ein pH-Wert von 9,5 resultiert, bis eine homogene Verteilung erreicht ist.

Zu dieser Masse gibt man 0,55 Teile der gemäss Beispiel 1 hergestellten Dispersion und verührt weitere 5 Minuten bei Raumtemperatur.

Mit der erhaltenen Streichmasse wird auf einer Laborstreichmaschine ein holzfreies Papier, welches noch keinen optischen Aufheller enthält (90 g/m², Cobb30 = 12 g/m², ISO Weisse 82,4 %) bestrichen. Das Gewicht der Deckschicht nach Konditionierung bei 23 °C und 50 % relativer Feuchtigkeit beträgt 9 g/m². Man trocknet in einem Infrarot-und anschliessend in einem Heisslufttrockner bis eine Restfeuchte von 7 % erreicht ist.

Man erhält ein Papier, das bezüglich Fluoreszenz und Aufheller- Wirkung gleich gut ist wie Papier, das unter Verwendung handelsüblicher Formulierungen des gleichen Aufhellers als Lösung, enthaltend Harnstoff, hergestellt wird.

### Beispiel 7:

Arbeitet man wie im Beispiel 1 beschrieben, verwendet jedoch den Aufheller der Formel 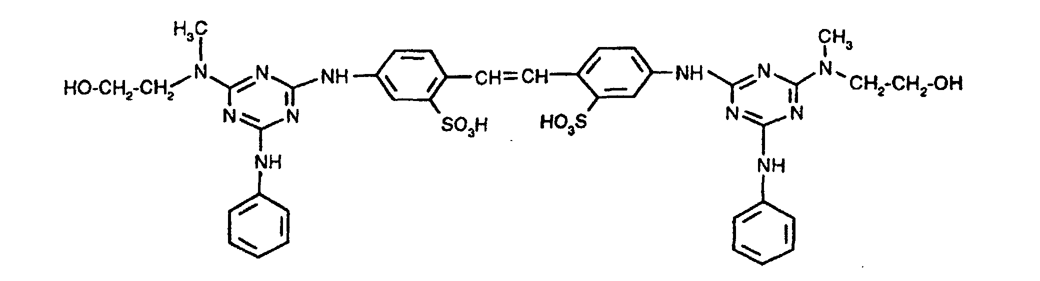 in Form der freien Säure, so erhält man ebenfalls eine Dispersion, die auch nach mehrwöchiger Lagerung bei 25 °C keine Ablagerungen zeigt.

### Beispiel 8:

Arbeitet man wie im Beispiel 1 beschrieben, verwendet jedoch den Aufheller der Formel 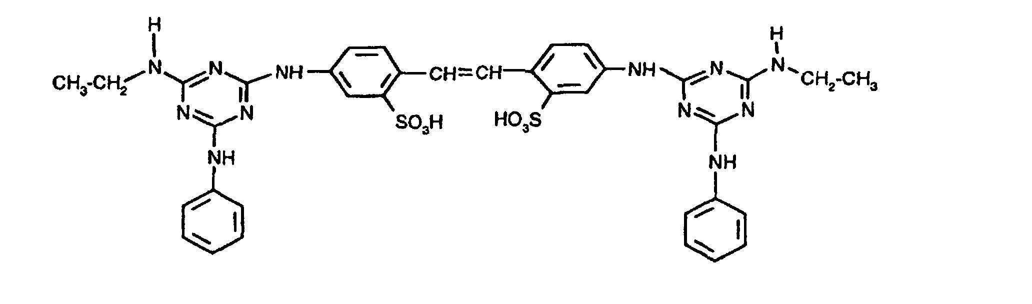 in Form der freien Säure, so erhält man ebenfalls eine Dispersion, die auch nach mehrwöchiger Lagerung bei 25 °C keine Ablagerungen zeigt.

### Beispiel 9:

Arbeitet man wie im Beispiel 1 beschrieben, verwendet jedoch den Aufheller der Formel 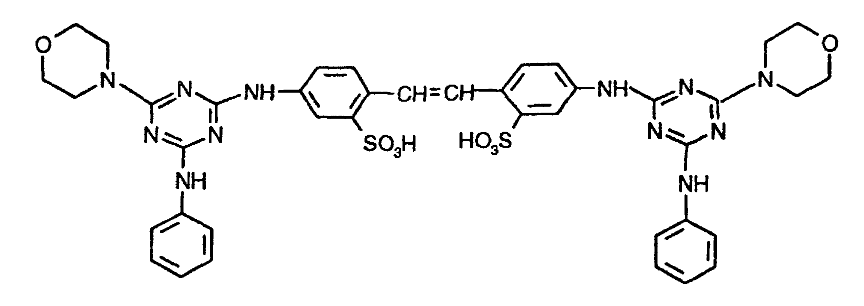 in Form der freien Säure, so erhält man ebenfalls eine Dispersion, die auch nach mehrwöchiger Lagerung bei 25 °C keine Ablagerungen zeigt.

## Patentansprüche

1. Dispersionen von optischen Aufhellem, **dadurch gekennzeichnet, dass** sie
a) 5 bis 60 Gew. %, bezogen auf das Gesamtgewicht der Dispersion, eines optischen Aufhellers der Formel 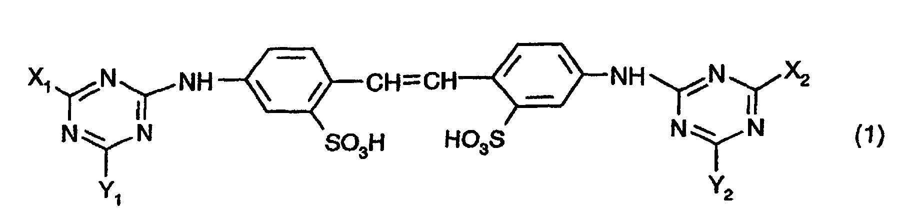 der als freie Säure vorliegt,
worin X₁, X₂, Y₁ und Y₂ unabhängig voneinander je eine NH₂-Gruppe oder einen primären oder sekundären Aminrest oder eine ggf. verzweigte Alkoxygruppe oder eine Phenoxygruppe bedeuten,
b) 0,01 bis 3 Gew. %, bezogen auf das Gesamtgewicht der Dispersion, einer Polyhydroxyverbindung die
(i) ein anionisches modifiziertes Polysaccharid enthalten, das sich von der Zellulose, Stärke oder von Heteropolysacchariden ableitet, wobei in den Seitenketten als weitere Monosaccharide Mannose und Glucuronsäure enthalten sein können oder
(ii) einen anorganischen Verdicker oder ein Gemisch aus einem anorganischen und einem organischen Verdicker darstellt, wobei der anorganische Verdicker Hektorit oder Montmorillonit ist,
c) Wasser und gegebenenfalls
d) weitere Zusätze enthalten, mit dem Vorbehalt, dass die Dispersionen keine weiteren Dispergatoren enthalten.

2. Dispersionen gemäss Anspruch 1, **dadurch gekennzeichnet, dass** sie weniger als 2 Gew. % Elektrolyt enthalten, bezogen auf das Gesamtgewicht der Dispersion.

3. Dispersionen gemäss einem der Ansprüche 1 oder 2, **dadurch gekennzeichnet, dass** sie 10 bis 50 Gew.% optischen Aufheller, bezogen auf das Gesamtgewicht der Dispersion, enthalten.

4. Dispersionen gemäss einem der Ansprüche 1 bis 3, **dadurch gekennzeichnet, dass** sie einen Aufheller der Formel 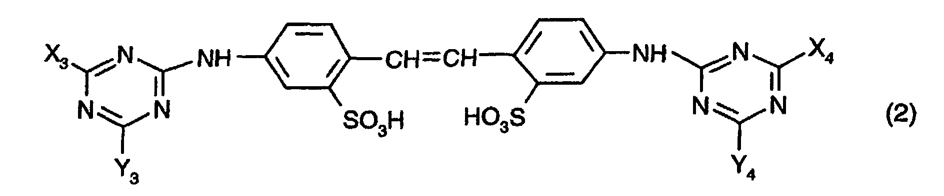 enthalten, worin X₃, X₄, Y₃ und Y₄ unabhängig voneinander je eine Phenylaminogruppe, die durch C₁-C₂-Alkyl mono- oder disubstituiert sein kann, die Morpholinogruppe, eine Mono-C₁-C₄-Alkylamino- oder Di-C₁-C₄-Alkylaminogruppe, die durch einen oder mehrere Hydroxylreste substituiert sein können, oder eine C₁-C₄-Alkoxygruppe bedeuten.

5. Dispersionen gemäss einem der Ansprüche 1 bis 4, **dadurch gekennzeichnet, dass** sie einen optischen Aufheller der Formel 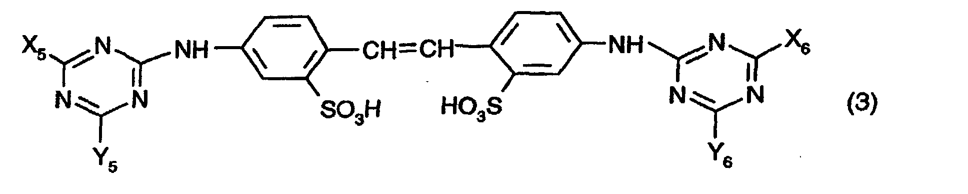 enthalten, worin X₅ und X₆ unabhängig voneinander je eine Phenylaminogruppe, die durch C₁-C₂-Alkyl mono- oder disubstituiert sein kann, und Y₅ und Y₆ eine Morpholinogruppe oder eine Di-C₁-C₄- Alkylaminogruppe, die durch einen oder mehrere Hydroxylreste substituiert sein kann, bedeuten.

6. Dispersionen gemäss einem der Ansprüche 1 bis 5, **dadurch gekennzeichnet, dass** sie mehr als 25 Gew. % optischen Aufheller und weniger als 0,8 Gew. % Elektrolyt enthalten.

7. Dispersionen gemäss einem der Ansprüche 1 bis 6, **dadurch gekennzeichnet, dass** sie als Polyhydroxyverbindung Natriumalginat, carboxymethyliertes Guar, Carboxymethylcellulose, Carboxyethylcellulose, Carboxymethylstärke, carboxymethyliertes Johannisbrotkernmehl oder Xanthan enthalten.

8. Dispersionen gemäss einem der Ansprüche 1 bis 7, **dadurch gekennzeichnet, dass** sie die Polyhydroxyverbindung in einer Menge von 0,01 bis 3 Gew. %, bezogen auf das Gewicht der Dispersion, enthalten.

9. Verwendung der Dispersionen von optischen Aufhellern gemäss Anspruch 1 zum optischen Aufhellen von Streichmassen für die Beschichtung von Papier oder Karton.

10. Verwendung der Dispersionen von optischen Aufhellern gemäss Anspruch 1 zum optischen Aufhellen von Faserstoffdispersionen bei der Papierherstellung.

11. Zusammensetzung zum Beschichten von Papier, enthaltend eine Dispersion eines optischen Aufhellers gemäss einem der Ansprüche 1 bis 8.

12. Zusammensetzung zum Aufhellen von Faserstoffdispersionen bei der Papierherstellung, enthaltend eine Dispersion eines optischen Aufhellers gemäss einem der Ansprüche 1 bis 8.

13. Papier, erhalten durch die Verwendung gemäss Anspruch 9.

14. Papier, erhalten durch die Verwendung gemäss Anspruch 10.

## Revendications

1. Dispersions d'azurants optiques, **caractérisées en ce qu'**elles renferment
a) de 5 à 60 % en masse, par rapport à la masse totale de la dispersion, en un azurant optique de formule 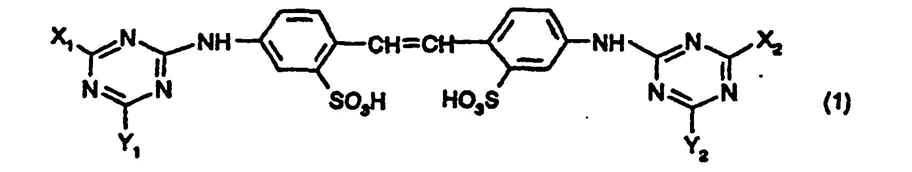 qui se présente sous forme d'acide libre,
où X₁, X₂, Y₁ et Y₂ représentent chacun, indépendamment les uns des autres, un groupe NH₂, un reste amino primaire ou secondaire ou un groupe alkoxy éventuellement ramifié ou un groupe phénoxy,
b) de 0,01 à 3 % en masse, par rapport à la masse totale de la dispersion, d'un composé polyhydroxylé qui renferme
(i) un polysaccharide modifié, dérivant de la cellulose, de l'amidon ou des hétéropolysaccharides, le mannose et l'acide glucuronique pouvant être contenus, en tant d'autres monosaccharides, dans des chaînes latérales, ou
(ii) un épaississant inorganique ou un mélange d'un épaississant organique et d'un épaississant inorganique, l'épaississant inorganique étant l'hectorite ou la montmorillonite,
c) l'eau et éventuellement
d) d'autres substances, à condition que la dispersion ne renferme pas d'autres dispersants.

2. Dispersions selon la revendication 1, **caractérisées en ce qu'**elles présentent une teneur en électrolyte inférieure à 2 % en masse, par rapport au poids total de la dispersion.

3. Dispersions selon l'une des revendications 1 ou 2, **caractérisées en ce qu'**elles présentent une teneur en azurant optique de 10 à 50 % en masse, par rapport au poids total de la dispersion.

4. Dispersions selon l'une des revendications 1 à 3, **caractérisées en ce qu'**elles renferment un azurant optique de formule 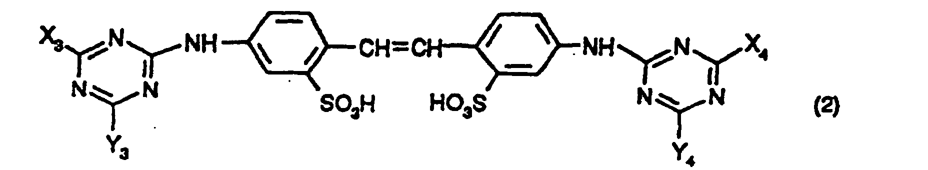 où X₃, X₄, Y₃ et Y₄ représentent chacun, indépendamment les uns des autres, un groupe phénylamino, qui peut être mono- ou disubstitué par des substituants alkyle en C₁-C₂, le groupe morpholino, un groupe mono(alkyl en C₁-C₄)amino ou un groupe di(alkyl en C₁-C₄)amino, qui peuvent être substitués par un ou plusieurs restes hydroxyle ou représentent un groupe alkoxy en C₁-C₄.

5. Dispersions selon l'une des revendications 1 à 4, **caractérisées en ce qu'**elles renferment un azurant optique de formule 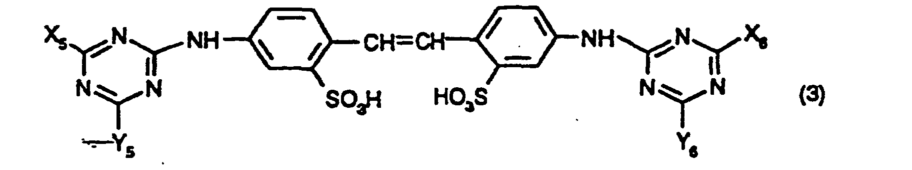 où X₅ et X₆ représentent chacun, indépendamment l'un de l'autre, un groupe phénylamino, qui peut être mono- ou disubstitué par des substituants alkyle en C₁-C₂ et Y₅ et Y₆ représentent un groupe morpholino ou un groupe di(alkyl en C₁-C₄)amino, qui peut être substitué par un ou plusieurs restes hydroxyle.

6. Dispersions selon l'une des revendications 1 à 5, **caractérisées en ce qu'**elles présentent une teneur supérieure à 25 % en azurant optique et une teneur inférieure à 0,8 % en masse en électrolyte.

7. Dispersions selon l'une des revendications 1 à 6, **caractérisées en ce qu'**elles renferment, en tant que composé polyhydroxylé, de l'alginate de sodium, du guar carboxyméthylé, de la carboxyméthylcellulose, de la carboxyéthylcellulose, du carboxyméthylamidon, de la farine de kharoube carboxyméthylée et avant tout du xanthane.

8. Dispersions selon l'une des revendications 1 à 7, **caractérisées en ce qu'**elles présentent une teneur en composé polyhydroxylé de 0,01 à 3 % en masse, par rapport au poids de la dispersion.

9. Utilisation des dispersions d'azurants optiques selon la revendication 1 pour l'azurage optique de sauces de couchage pour l'enduction du papier ou du carton.

10. Utilisation des dispersions d'azurants optiques selon la revendication 1 pour l'azurage optique de dispersion de fibres dans la fabrication de papier.

11. Composition pour l'enduction de papier, renfermant une dispersion d'un azurant optique selon l'une des revendications 1 à 8.

12. Composition pour l'azurage de dispersions de matières fibreuses dans la fabrication de papier, renfermant une dispersion d'un azurant optique selon l'une des revendications 1 à 8.

13. Papier obtenu par l'utilisation selon la revendication 9.

14. Papier obtenu par l'utilisation selon la revendication 10.

## Claims

1. A dispersion of fluorescent whitening agents, which comprises
a) 5 to 60% by weight, based on the total weight of the dispersion, of a fluorescent whitening agent of the formula 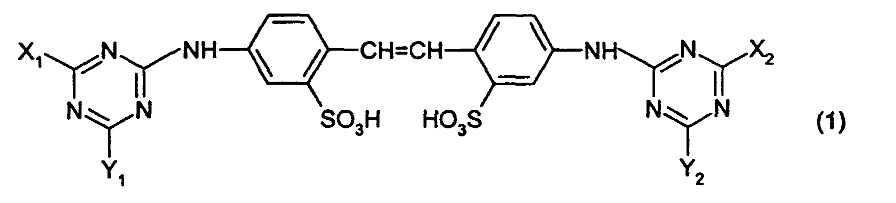 in the form of the free acid,
wherein X₁, X₂, Y₁ and Y₂ are each independently of one another an NH₂ group or a primary or secondary amine radical or an unbranched or branched alkoxy group or a phenoxy group,
b) 0.01 to 3% by weight, based on the total weight of the dispersion, of a polyhydroxyl compound which
(i) is an anionic modified polysaccharide which is derived from cellulose, starch or heteropolysaccharides and which may contain in the side chains as further monosaccharides mannose and glucuronic acid or
(ii) is an inorganic thickener or a mixture of an inorganic and an organic thickener, where the inorganic thickener is hectorite or montmorillonite,
c) water and, optionally,
d) further additives, with the proviso that the dispersion contains no further dispersants.

2. A dispersion according to claim 1, which comprises less than 2% by weight of electrolyte, based on the total weight of the dispersion.

3. A dispersion according to claim 1 or 2, which comprises 10 to 50% by weight of fluorescent whitening agent, based on the total weight of the dispersion.

4. A dispersion according to any one of claims 1 to 3, which comprises a whitener of formula 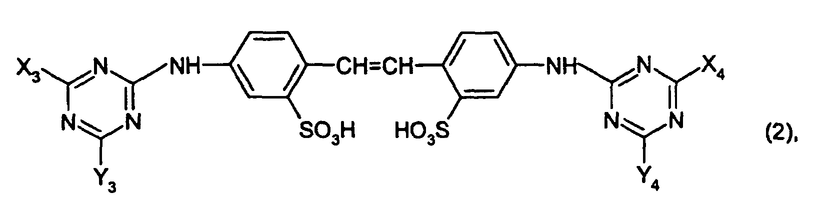 wherein X₃, X₄, Y₃ and Y₄ are each independently of one another a phenylamino group which may be mono- or disubstituted by C₁-C₂alkyl, a morpholino group, a mono-C₁-C₄alkylamino or di-C₁-C₄alkylamino group which may be substituted by one or more than one hydroxyl radical, or a C₁-C₄alkoxy group.

5. A dispersion according to any one of claims 1 to 4, which comprises a fluorescent whitening agent of formula 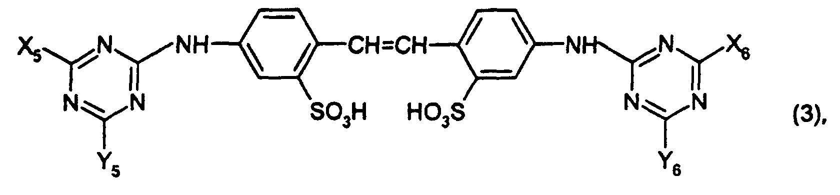 wherein X₅ and X₆ are each independently of the other a phenylamino group which may be mono- or disubstituted by C₁-C₂alkyl, and Y₅ and Y₆ are a morpholino group or a di-C₁-C₄alkylamino group which may be substituted by one or more than one hydroxyl radical.

6. A dispersion according to any one of claims 1 to 5, which comprises more than 25% by weight of fluorescent whitening agent and less than 0.8% by weight of electrolyte.

7. A dispersion according to any one of claims 1 to 6, wherein the polyhydroxyl compound is sodium alginate, carboxymethylated guar, carboxymethyl cellulose, carboxyethyl cellulose, carboxymethyl starch, carboxymethylated carob bean flour or xanthan.

8. A dispersion according to any one of claims 1 to 7, wherein the polyhydroxyl compound is present in an amount of 0.01 to 3% by weight, based on the weight of the dispersion.

9. Use of a dispersion of fluorescent whitening agents according to claim 1 for the fluorescent whitening of coating compositions for coating paper or cardboard.

10. Use of a dispersion of fluorescent whitening agents according to claim 1 for the fluorescent whitening of fibre dispersions in papermaking.

11. A composition for coating paper, comprising a dispersion of a fluorescent whitener according to any one of claims 1 to 8.

12. A composition for whitening fibre dispersions in papermaking, comprising a dispersion of a fluorescent whitener according to any one of claims 1 to 8.

13. Paper obtained by use according to claim 9.

14. Paper obtained by use according to claim 10.
